# EUROPÄISCHE PATENTSCHRIFT

(11) **EP 2 639 910 B1**
(45) Veröffentlichungstag und Bekanntmachung des Hinweises auf die Patenterteilung: **19.07.2017**
(21) Anmeldenummer: 13158519.2
(22) Anmeldetag: 11.03.2013
(51) Int. Cl.: H02G 3/08, H02G 3/12, H02G 3/04

(54) **Geräteeinbaudose für Geräteeinbaukanäle sowie diese umfassender Geräteeinbaukanal**
Device installation socket for device installation channels and equipment installation channel comprising same
Boîtier encastrable pour canaux d'intégration d'appareil et canal d'intégration d'appareils doté de celui-ci

(30) Priorität: 12.03.2012 DE 202012100877 U
(43) Veröffentlichungstag der Anmeldung: 18.09.2013
(73) Patentinhaber: REHAU AG + Co, 95111 Rehau (DE)
(72) Erfinder: Seidel, Bernd, 08209 Auerbach (DE); Künzel, Werner, 95111 Rehau (DE); Christ, Michael, 95028 Hof (DE); Friedrich, Jochen, 95119 Naila (DE); Salzhuber, Frank, 90419 Nürnberg (DE); Engelbrecht, Bernd Jürgen, 90763 Fürth (DE)

(56) Entgegenhaltungen:
- EP-A1- 0 993 090
- EP-A1- 1 848 081
- EP-A2- 1 271 734
- DE-A1- 3 642 895
- DE-C1- 4 332 929
- DE-U1- 20 022 098

## Beschreibung

Die vorliegende Erfindung bezieht sich auf eine Geräteeinbaudose für Geräteeinbaukanäle, die ein Gehäuse mit einem Bodenteil, an einer Seite des Bodenteils angeordneten Wandungen, einer offenen Oberseite sowie an der anderen Seite des Bodenteils angeordnete Haltevorrichtung zur Befestigung der Geräteeinbaudose am Geräteeinbaukanal umfasst, wobei in den Wandungen Kabeleinführungen mit einer Tiefe in den jeweiligen Wandungen angeordnet sind. Darüber hinaus bezieht sich die vorliegende Erfindung auf einen Geräteeinbaukanal, der mindestens eine derartige Geräteeinbaudose für Geräteeinbaukanäle umfasst.

Derartige Geräteeinbaudosen sind im Stand der Technik bekannt, beispielsweise aus der DE 43 32 929 C1. Die darin beschriebene Geräteeinbaudose weist zur Durchführung der Leitung beim Einsetzen eines Kabels dünne ausgebildete und daher flexible Wandungsbereiche auf, die durch einen Durchführungsschlitz mit gleichbleibender Breite von 2,5 mm oder weniger unterbrochen sind. Beim Durchführen eines in eine derartige Geräteeinbaudose einzuführenden Kabels treten in den Wandungen jedoch hohe mechanische Spannungen auf, die zu einer starken Verformung derartiger Geräteeinbaudosen beim Einführen von entsprechenden Kabeln führen. Darüber hinaus reiben die dünnen Bereiche der Wandungen derartiger Geräteeinbaudosen beim Einführen von Kabeln an den Kabelwandungen, so dass die Gefahr von Beschädigungen der in die Geräteeinbaudosen eingeführten Kabel besteht. Eine Geräteeinbaudose gemäß dem Oberbegriff des unabhängigen Anspruchs 1 ist aus der DE 36 42 895 A1 bekannt. Vor diesem Hintergrund liegt die Aufgabe der vorliegenden Erfindung in der Bereitstellung einer Geräteeinbaudose und eines entsprechenden Geräteeinbaukanals, die bzw. der die Nachteile des Standes der Technik überwindet. Insbesondere soll die erfindungsgemäße Geräteeinbaudose mindestens eine Kabeleinführung aufweisen, die in die erfindungsgemäße Geräteeinbaudose eingeführte Kabel während des Einführens nicht beschädigt und weiter ein Austreten des in die erfindungsgemäße Geräteeinbaudose eingeführten Kabels durch die Kabeleinführung wirksam verhindert. Darüber hinaus soll die erfindungsgemäße Geräteeinbaudose einfach und kostengünstig herzustellen sein. Diese und andere Aufgaben werden durch eine Geräteeinbaudose für Geräteeinbaukanäle mit den Merkmalen des Anspruchs 1 bzw. durch einen Geräteeinbaukanal mit den Merkmalen des Anspruchs gelöst.

Gemäß der vorliegenden Erfindung wurde erkannt, dass die Wandungen von Kabeln, die in eine Geräteeinbaudose eingeführt werden, dann nicht mehr beschädigt werden, wenn die Kabeleinführungen der erfindungsgemäßen Geräteeinbaudose zur offenen Oberseite des Gehäuses hin mit einer lichten Öffnungsweite ausgebildet sind, die größer ist als die Dicke der Wandungen selbst. Darüber hinaus ist die lichte Öffnungsweite der Kabeleinführungen über mindestens 50 %, vorzugsweise über mindestens 60 % der Tiefe der Kabeleinführung in der jeweiligen Wandung gleichbleibend. Dadurch nimmt die in der erfindungsgemäßen Geräteeinbaudose während des Einführens eines Kabels auftretende Spannung nicht mit zunehmender Tiefe zu, mit der das Kabel in die Geräteeinbaudose eingeführt wird. Darüber hinaus weist die Kabeleinführung an beiden Seiten Rückhalteelemente auf, die ein Austreten des einmal in die erfindungsgemäße Geräteeinbaudose eingeführten Kabels verhindern.

Dementsprechend liegt die vorliegende Erfindung in der Bereitstellung einer Geräteeinbaudose für Geräteeinbaukanäle, die ein Gehäuse mit einem Bodenteil, an einer Seite des Bodenteils angeordneten Wandungen, einer offenen Oberseite sowie an der anderen Seite des Bodenteils angeordneten Haltevorrichtungen zur Befestigung der Geräteeinbaudose am Geräteeinbaukanal umfasst, wobei in den Wandungen Kabeleinführungen mit einer Tiefe in den jeweiligen Wandungen angeordnet sind, wobei zumindest eine der Kabeleinführungen zur offenen Oberseite des Gehäuses hin offen ausgebildet ist und eine lichte Öffnungsweite besitzt, die die Dicke der Wandungen übersteigt und über mindestens 50 %, vorzugsweise über mindestens 60 % der Tiefe der betreffenden Kabeleinführung (Abstand zwischen dem Grund der Kabeleinführung und dem oberen Rand des Gehäuses der erfindungsgemäßen Geräteeinbaudose) in der jeweiligen Wandung gleichbleibend ist, wobei die Kabeleinführung an beiden Seiten Rückhalteelemente aufweist. Darüber hinaus liegt die vorliegende Erfindung in der Bereitstellung eines Geräteeinbaukanals, der mindestens eine erfindungsgemäße Geräteeinbaudose umfasst.

Gemäß der vorliegenden Erfindung sind derartige Rückhalteelemente sägezahnförmig ausgebildet. Derartige sägezahnförmige Rückhalteelemente haben sich als besonders wirksam darin erwiesen, in die erfindungsgemäße Geräteeinbaudose eingeführte Kabel darin zu halten und ein Austreten der Kabel aus der erfindungsgemäßen Geräteeinbaudose zu verhindern. Dabei kann es von besonderem Nutzen sein, wenn die einzelnen Sägezähne auf einer Seite der Kabeleinführung gegenüber denen auf der anderen Seite der Kabeleinführung versetzt angeordnet sind. Auf diese Weise werden beim Einführen des Kabels in die erfindungsgemäße Geräteeinbaudose auftretende Spannungen verringert, so dass die Gefahr von Verformungen der erfindungsgemäßen Geräteeinbaudose, die während des Einführens eines Kabels entstehen, verringert ist.

Es hat sich auch als günstig erweisen, wenn mindestens eine der Kabeleinführungen an ihrer offenen Oberseite der Geräteeinbaudose gegenüberliegenden Seite Kabelhalteelemente aufweist. Diese Kabelhalteelemente können beispielsweise als einseitig oder zweiseitig offene runde Spangen ausgebildet sein. Darüber hinaus können die Kabelhalteelemente mit der jeweiligen Wandung der erfindungsgemäßen Geräteeinbaudose über lediglich eine Verbindungsstelle verbunden sein oder mehrere Verbindungsstellen mit der jeweiligen Wandung aufweisen.

Darüber hinaus ist es von Vorteil, wenn die Wandungen der erfindungsgemäßen Geräteeinbaudose im Bereich der Rückhalteelemente und/oder der Kabelhalteelemente eine oder mehrere Ausnehmungen aufweisen. Derartige Ausnehmungen erhöhen die Flexibilität der Wandungen der erfindungsgemäßen Geräteeinbaudose, so dass während des Einführens eines Kabels in die erfindungsgemäße Geräteeinbaudose auftretende mechanische Spannungen und damit einhergehende Verformungen weiter reduziert werden können.

Zur Herstellung der erfindungsgemäßen Geräteeinbaudose hat sich Spritzgießen als bevorzugte Art der Herstellung erwiesen. Polyvinylchlorid (PVC), Polyethylen (insbesondere Polyethylen hoher Dichte HDPE), Polypropylen (insbesondere statistisches Polypropylen PP-R) und Polyamid (insbesondere PA-6 und PA-6,6) dienen als bevorzugte Materialien für die erfindungsgemäße Geräteeinbaudose und den erfindungsgemäßen Geräteeinbaukanal, der vorzugsweise durch Extrudieren erhalten werden kann. Im Folgenden wird die vorliegende Erfindung unter Bezugnahme auf die in den Figuren dargestellten Ausführungsformen im Detail erläutert werden. Dabei zeigen:
- Fig. 1: eine perspektivische Ansicht einer Ausführungsform einer erfindungsgemäßen Geräteeinbaudose;
- Fig. 2: verschiedene Ausführungsformen für Kabeleinführungen der erfindungsgemäßen Geräteeinbaudose; und
- Fig. 3: eine Querschnittdarstellung der in Fig. 1 gezeigten Ausführungsform der erfindungsgemäßen Geräteeinbaudose eingesetzt in einen Geräteeinbaukanal.

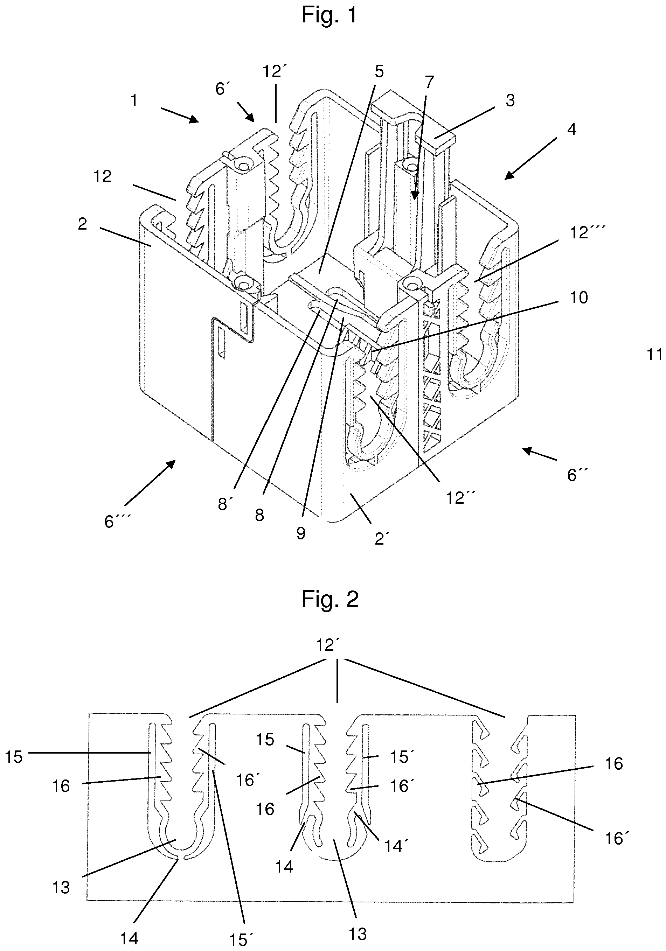

In Figur 1 ist eine Ausführungsform einer erfindungsgemäßen Geräteeinbaudose 1 in einer perspektivischen Darstellung gezeigt, wobei zwei reversibel einsetzbare Eckstücke 2, 2' der Geräteeinbaudose 1 sowie ein Arretierungselement 3 in die erfindungsgemäßen Geräteeinbaudose 1 eingesetzt sind. Die erfindungsgemäßen Geräteeinbaudose 1 umfasst ein nach oben offenes Gehäuse 4 mit einem Bodenteil 5 sowie Wandungen 6, 6', 6", 6"'. Dabei ist die Wandung 6 als Ganzes einstückig mit dem Bodenteil 4 verbunden, während die Wandungen 6', 6" nur etwa zur Hälfte einstückig mit dem Bodenteil 4 des Montageelements 1 verbunden sind. Der Rest der Wandungen 6', 6" sowie die der Wandung 6 gegenüberliegende Wandung 6'" werden durch Eckstücke 2, 2` gebildet, die entfernbar in das Montageelement 1 eingesetzt sind. An der Wandung 6 ist eine Führung 7 angeordnet, die zur Führung des Arretierungselements 3 dient.

Das Bodenteil 5 des Montageelements 1 weist zwei vorzugsweise parallel zueinander verlaufende Öffnungen 8, 8' auf, die als Freischnitte ausgebildet sind und die voneinander durch einen Steg 9 getrennt sind. In der in Fig. 1 gezeigten Ausführungsform ist der Steg 9 überhöht ausgebildet, d.h. seine Dicke übersteigt die Stärke des Bodenteils 5. Dabei ist der Steg 9 etwa in der Mitte seiner Längserstreckung am dicksten ausgebildet. An der der Wandung 6 abgewandten Seite der Öffnung 8 ist ein Stützelement 10 angeformt.

An den Wandungen 6', 6" sind jeweils zwei Kabeleinführungen 12, 12', 12", 12'" vorhanden. Dabei sind die Kabeleinführungen 12 und 12" jeweils in den jeweiligen Eckstücken 2, 2' angeordnet, während die beiden Kabeleinführungen 12' und 12'" an den festen Teilen der Wandungen 6' und 6" vorhanden sind. Die Kabeleinführungen 12, 12', 12", 12'" sind paarweise zur Aufnahme von Kabeln verschiedener Durchmesser optimiert.

Eine vergrößerte schematische Querschnittansicht einer derartigen Kabeleinführung 12' sowie weiterer bevorzugter Ausführungsformen der Kabeleinführung 12' ist in Figur 2 gezeigt. Die in Figur 2 auf der linken Seite dargestellte Ausführungsform der Kabeleinführung 12' ist in der Figur 1 dargestellten Ausführungsform der vorliegenden Erfindung eingesetzt. Die Kabeleinführung 12' ist dabei zur offenen Oberseite des Gehäuses 4 der erfindungsgemäßen Geräteeinbaudose hin offen ausgebildet. Dabei besitzt die Kabeleinführung 12' eine lichte Öffnungsweite, die die Dicke der Wandungen 6, 6', 6", 6'" der erfindungsgemäßen Geräteeinbaudose 1 übersteigt (zumindest um das Doppelte). Darüber hinaus ist die lichte Öffnungsweite der Kabeleinführung 12' über etwa 65 % der Tiefe der jeweiligen Kabeleinführung 12'(Abstand zwischen dem Grund der Kabeleinführung und dem oberen Rand des Gehäuses 4 der erfindungsgemäßen Geräteeinbaudose 1) in der entsprechenden Wandung 6, 6', 6", 6'" gleichbleibend. Ferner verfügt die Kabeleinführung 12' über ein Rückhalteelement 13. Das Rückhalteelement 13 weist dabei eine nach oben hin offene, ansonsten runde (spangenförmige) Kontur auf. Die Form des Rückhalteelements 13 ist zur Aufnahme eines Kabels mit einem vorgegebenen Außendurchmesser optimiert. Das Kabelhalteelement 13 ist über einen Anbindungssteg 14 mit der Wandung 6' verbunden. Der Anbindungssteg 14 trennt zwei Ausnehmungen 15, 15' voneinander, die im Bereich des Kabelhalteelements 13 sowie entlang der Ränder der Kabeleinführung 12' angeordnet sind. Die Ausnehmungen 15, 15' verleihen der Kabeleinführung 12' die für die Einführung entsprechender Kabel erforderliche Flexibilität. An beiden Seiten der Kabeleinführung 12' sind Rückhalteelemente 16, 16' angeordnet. Diese Rückhalteelemente 16, 16' sollen verhindern, dass sich ein einmal in die Kabelführung 12' eingeführtes Kabel unerwünschterweise wieder aus der Kabeleinführung 12' löst. In der gezeigten Ausführungsform sind die Rückhalteelemente 16, 16' sägezahnförmig ausgebildet und in zwei vertikal verlaufenden Reihen mit fünf bzw. vier Sägezähnen angeordnet, wobei die Rückhalteelemente 16, 16' einer Reihe versetzt zu denen der anderen Reihe angeordnet sind.

Im Folgenden werden weitere Ausgestaltungen der Kabeleinführung 12, 12', 12", 12'" der erfindungsgemäßen Geräteeinbaudose erläutert. Es soll dabei auf die Unterschiede eingegangen werden, um Wiederholungen zu vermeiden. Ansonsten gelten die zur in Figur 2 ganz links gezeigten Ausgestaltungen der Kabeleinführung 12, 12', 12", 12'" entsprechend. Darüber hinaus wird die Kabeleinführung 12, 12', 12", 12'" hier am Beispiel der Kabeleinführung 12' erläutert. Entsprechendes gilt ebenso für die anderen Kabeleinführungen 12, 12",12"`.

Die in der mittleren Ausführung der Kabeleinführung 12' in Fig. 2 ähnelt der in Fig. 1 gezeigten Kabeleinführung 12' sehr stark. Allerdings weist das Kabelhalteelement 13 an seiner zum Grund der Kabeleinführung 12' gerichteten Seite eine weitere Öffnung auf. Darüber hinaus ist das Kabelhalteelementen 13 über zwei Anbindungsstege 14, 14' an die Wandung 6' der erfindungsgemäßen Geräteeinbaudose 1 angebunden. Im Bereich der beiden Reihen von sägezahnförmigen Rückhalteelementen 16, 16' befinden sich wiederum Ausnehmungen 15, 15', die der erfindungsgemäßen Geräteeinbaudose beim Einführen von Kabeln in die Kabeleinführungen 12, 12', 12", 12'" die nötige Flexibilität verleihen. Eine weitere Ausnehmung ist zwischen dem Kabelhalteelement 13 und der Wandung 6' ausgebildet.

Eine weitere Ausführungsform der Kabeleinführung 12' ist in Fig. 2 in der rechten Ausführung gezeigt. In dieser Ausgestaltung ist die lichte Öffnungsweite der Kabeleinführung 12' annähernd über die gesamte Tiefe konstant ausgebildet und lediglich im Bereich des Grundes abgerundet ausgebildet. Es sind wiederum zwei Reihen von Rückhalteelementen 16, 16' vorhanden, wobei die linke Reihe wiederum fünf Rückhalteelemente 16 und die rechte vier Rückhalteelemente 16' aufweist, die wiederum jeweils versetzt zueinander angeordnet sind. Die Rückhalteelemente 16, 16' sind als zum Grund der Kabeleinführung 12' abgewinkelte Stege ausgebildet, an deren Ende eine Verbreiterung angeformt ist. Die Verbreiterung erschwert das Austreten eines in die Kabeleinführung 12' eingesetzten Kabels weiter. Der Kabeleinführung 12' Flexibilität verleihende Ausnehmungen sind hier nicht vorhanden. Die nötige Flexibilität der erfindungsgemäßen Geräteeinbaudose 1 ist bei einer derartigen Ausführungsform der Kabeleinführungen 12, 12', 12", 12'" durch die Flexibilität der Stege der Rückhalteelemente 16, 16' selbst gegeben.

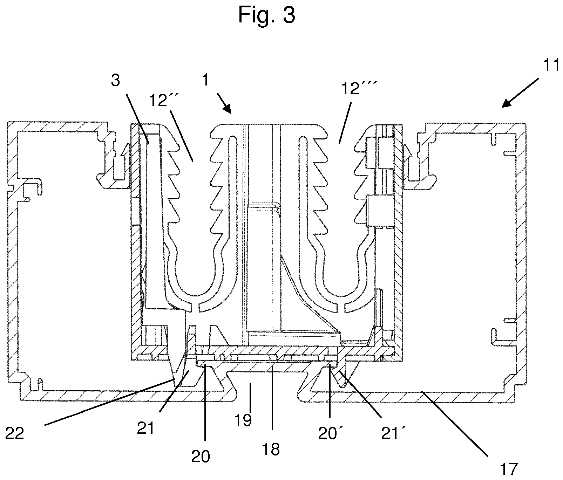

Fig. 3 zeigt eine Querschnittsdarstellung der in Figur 1 gezeigten Ausführungsform der erfindungsgemäßen Geräteeinbaudose 1 im in einen Geräteeinbaukanal 11 eingesetzten Zustand, wobei das Arretierungselement 3 in die Geräteeinbaudose 1 eingesetzt ist. Der Geräteeinbaukanal 11 weist eine am Kanalboden 17 angeordnete Halteschiene 18 auf, die in der vorliegenden Ausführungsform als Hutschiene 18 ausgebildet ist.

Die Halteschiene 18 weist an der der erfindungsgemäßen Geräteeinbaudose 1 abgewandten Seite der Halteschiene 18 eine sich in Längsrichtung des Geräteeinbaukanals 11 erstreckende Ausnehmung 19 auf, die eine vereinfachte Wandmontage des Geräteeinbaukanals 11 ermöglicht. An beiden Seiten der Halteschiene 18 sind Rastvorsprünge 20, 20' angeordnet, die mit als Rasthaken ausgebildeten Haltevorrichtungen 21, 21' der erfindungsgemäßen Geräteeinbaudose 1 kooperieren, die an der den Wandungen 6, 6', 6", 6'" des Gehäuses 4 abgewandten Seite des Bodenteils 5 der Geräteeinbaudose 1 angeordnet sind. Zum Einbau der Geräteeinbaudose 1 in den Geräteeinbaukanal 11 werden zunächst die Haltevorrichtungen 21' (es handelt sich um zwei Haltevorrichtungen 21', wobei die erste die andere in der Querschnittsdarstellung gemäß Fig. 3 verdeckt) hinter den Rastvorsprung 20' der Halteschiene 18 angeordnet und die Geräteeinbaudose 1 mit der Halteschiene 18 verrastet, indem die Geräteeinbaudose 1 in Richtung des Kanalbodens 17 gedrückt wird. Dadurch schiebt sich das Halteelement 21, das aufgrund der Öffnungen 8, 8' als flexible Rasthaken ausgebildet ist, über eine Einführungsschräge über den anderen Rastvorsprung 20 der Halteschiene 18, bis die Haltevorrichtung 21 über die Halteschiene 18 geschoben ist und die erfindungsgemäße Geräteeinbaudose 1 mit der Halteschiene 18 des Geräteeinbaukanals 11 verrastet. Damit liegen die aufgrund von Stützelementen als starre Rasthaken ausgebildeten Haltevorrichtungen 21' auf einer Längsseite der Halteschiene 18 an, während die flexible Haltevorrichtung 21 an der anderen Längsseite der Halteschiene 18 anliegt. Auf diese Weise ist die Verschiebbarkeit der erfindungsgemäßen Geräteeinbaudose 1 entlang der Halteschiene 18 des Geräteeinbaukanals 11 gewährleistet.

Nachdem die erfindungsgemäße Geräteeinbaudose 1 in ihre exakte Position in Längsrichtung des Geräteeinbaukanals 11 gebracht worden ist, wird das Arretierungselement 3 entlang der Führung 7 vollständig in Richtung des Kanalbodens 17 gedrückt. Dadurch gelangt ein Stützabschnitt 22 des Arretierungselements 3 in eine Position, in der er an der Halteschiene 18 abgewandten Seite der flexiblen Haltevorrichtung 21 anliegt und so die flexible Haltevorrichtung 21 stärker gegen den Rastvorsprung 20 der Halteschiene 18 presst. Dadurch wird ein weiteres Verschieben der erfindungsgemäßen Geräteeinbaudose 1 entlang der Halteschiene 18 wirksam verhindert. Auf diese Weise ist die Position der erfindungsgemäßen Geräteeinbaudose 1 in dem Geräteeinbaukanal 11 arretiert.

Nach einer derartigen Montage des der erfindungsgemäßen Geräteeinbaudose 1 in den Geräteinbaukanal 11 können Installationsgeräte wie Steckdosen, Schalter, Empfänger von Fernsteuerungssystemen, Datendosen, Telefondosen und dergleichen in die erfindungsgemäße Geräteeinbaudose 1 eingesetzt und beispielsweise durch Verschraubung darin befestigt werden.

Die vorliegende Erfindung wurde unter Bezugnahme auf die in den Figuren gezeigte Ausführungsform der erfindungsgemäßen Geräteeinbaudose im Detail erläutert. Es versteht sich, dass die Erfindung nicht auf die dargestellte Ausführungsform beschränkt ist.

## Patentansprüche

1. Geräteeinbaudose (1) für Geräteeinbaukanäle (11), die ein Gehäuse (4) mit einem Bodenteil (5), an einer Seite des Bodenteils (5) angeordneten Wandungen (6, 6', 6", 6"'), einer offenen Oberseite sowie an der anderen Seite des Bodenteils (5) angeordnete Haltevorrichtungen (21, 21') zur Befestigung der Geräteeinbaudose (1) am Geräteeinbaukanal (11) umfasst, wobei in den Wandungen (6, 6', 6", 6"') Kabeleinführungen (12, 12', 12", 12"') mit einer Tiefe in den jeweiligen Wandungen (6, 6', 6", 6"') angeordnet sind, wobei zumindest eine der Kabeleinführungen (12, 12', 12", 12'") zur offenen Oberseite des Gehäuses (4) hin offen ausgebildet ist und die lichte Öffnungsweite die Dicke der Wandungen (6, 6', 6", 6"') übersteigt und an ihrer der offenen Oberseite der Geräteeinbaudose (1) gegenüberliegenden Seite mindestens ein Kabelhalteelement (13) aufweist, wobei die zumindest eine Kabeleinführung (12, 12', 12", 12"') an beiden Seiten Rückhalteelemente (16, 16') aufweist, wobei die Rückhalteelemente (16, 16') sägezahnförmig ausgebildet sind und die Wandungen (6, 6', 6", 6"') im Bereich der Rückhalteelemente (16, 16') und/oder der Kabelhalteelemente (13) eine oder mehrere Ausnehmungen (15, 15') aufweisen,
**dadurch gekennzeichnet, dass** die zumindest eine der Kabeleinführungen (12, 12', 12", 12"') eine lichte Öffnungsweite besitzt, die über mindestens 50% der Tiefe der betreffenden Kabeleinführung (12, 12', 12", 12'") in der jeweiligen Wandung (6, 6', 6", 6"') gleichbleibend ist.

2. Geräteeinbaukanal (11), der mindestens eine Geräteeinbaudose (1) für Geräteeinbaukanäle (11) gemäß Anspruch 1 umfasst.

## Claims

1. Device installation socket (1) for device installation channels (11), which comprises a housing (4) with a bottom part (5), walls (6, 6', 6", 6"') arranged on one side of the bottom part (5), an open upper side, and holding devices (21, 21') arranged on the other side of the bottom part (5) for fastening the device installation socket (1) to the device installation channel (11), wherein cable entries (12, 12', 12", 12"') are arranged in the walls (6, 6', 6", 6'") at a depth in the respective walls (6, 6', 6", 6"'), wherein at least one of the cable entries (12, 12', 12", 12"') is designed to be open towards the open upper side of the housing (4), and the clear opening width exceeds the thickness of the walls (6, 6', 6", 6"'), and, on its side opposite the open upper side of the device installation socket (1), has at least one cable-holding element (13), wherein the at least one cable entry (12, 12', 12", 12"') has retaining elements (16, 16') on both sides, wherein the retaining elements (16, 16') are of serrated design, and the walls (6, 6' 6", 6'") have one or more recesses (15, 15') in the region of the retaining elements (16, 16') and/or of the cable-holding elements (13), **characterized in that** the at least one of the cable entries (12, 12', 12", 12"') has a clear opening width which is constant over at least 50% of the depth of the relevant cable entry (12, 12', 12", 12"') in the respective wall (6, 6', 6", 6"').

2. Device installation channel (11) which comprises at least one device installation socket (1) for device installation channels (11) according to Claim 1.

## Revendications

1. Boîtier d'appareil encastrable (1) pour canaux d'intégration d'appareils (11), comprenant un boîtier (4) muni d'une partie de fond (5), de cloisons (6, 6', 6", 6"') disposées sur un côté de la partie de fond (5), d'une face supérieure ouverture ainsi que de dispositifs de maintien (21, 21') disposés sur l'autre côté de la partie de fond (5) pour la fixation du boîtier d'appareil encastrable (1) sur le canal d'intégration d'appareil (11), dans lequel dans les cloisons (6, 6', 6", 6"') des guides d'insertion de câbles (12, 12', 12", 12"') sont disposés à une certaine profondeur dans les cloisons (6, 6', 6", 6"') respectives, dans lequel au moins l'un des guides d'insertion de câbles (12, 12', 12", 12"') est réalisé de manière à s'ouvrir vers la face supérieure ouverte du boîtier (4) et la largeur d'ouverture libre est supérieure à l'épaisseur des cloisons (6, 6', 6", 6"') et présente sur sa face qui est opposée à la face supérieure ouverte du boîtier d'appareil encastrable (1) au moins un élément de maintien de câble (13), dans lequel l'au moins un guide d'insertion de câble (12, 12', 12", 12"') présente sur ses deux côtés des éléments de retenue (16, 16'), dans lequel les éléments de retenue (16, 16') sont réalisés de manière à présenter la forme de dents de scie et les cloisons (6, 6', 6", 6"') présentent un ou plusieurs évidements (15, 15') dans la région des éléments de retenue (16, 16') et/ou des éléments de maintien de câbles (13), **caractérisé en ce que** l'au moins un des guides d'insertion de câbles (12, 12', 12", 12"') possède une largeur d'ouverture libre qui est constamment supérieure à au moins 50% de la profondeur du guide d'insertion de câble (12, 12', 12", 12"') concerné dans la cloison (6, 6', 6", 6"') respective.

2. Canal d'intégration d'appareil (11) comprenant au moins un boîtier d'appareil encastrable (1) pour des canaux d'intégration d'appareils (11) selon la revendication 1.
